# EUROPÄISCHE PATENTSCHRIFT

(11) **EP 0 966 589 B1**
(45) Veröffentlichungstag und Bekanntmachung des Hinweises auf die Patenterteilung: **04.08.2004**
(21) Anmeldenummer: 98919060.8
(22) Anmeldetag: 04.03.1998
(51) Int. Cl.: E05F 11/48

(54) **SEILFENSTERHEBER**
CABLE-ACTUATED WINDOW LIFTER
LEVE-VITRE A CABLE

(30) Priorität: 04.03.1997 DE 19711046
(43) Veröffentlichungstag der Anmeldung: 29.12.1999
(73) Patentinhaber: Brose Fahrzeugteile GmbH & Co. KG, Coburg, 96450 Coburg (DE)
(72) Erfinder: FISCHER, Bernd, D-96450 Coburg (DE); KINDLER, Werner, D-96253 Untersiemau (DE); HÜTTER, Ottmar, D-96484 Meeder (DE)
(74) Vertreter: Baumgärtel, Gunnar, Dr.
(86) Internationale Anmeldenummer: PCT/DE1998/000684
(87) Internationale Veröffentlichungsnummer: WO 1998/039544

(56) Entgegenhaltungen:
- DE-A- 4 240 030
- US-A- 1 749 146

## Beschreibung

Die Erfindung bezieht sich auf einen Seilfensterheber gemäß dem Oberbegriff des Anspruchs 1.

Es sind ein- oder mehrsträngige Seilfensterheber - insbesondere für Kraftfahrzeuge - bekannt, die aus einer Antriebseinheit, die einen manuellen oder motorischen Antrieb und eine Antriebstrommel aufweist, einer Führungsschiene bzw. mehreren Führungsschienen für einen oder mehrere Mitnehmer, die mit einer Fensterscheibe und einem um die Antriebstrommel gewickelten Seil verbunden sind, und mehreren Seilumlenkrollen bestehen. Die Seilumlenkrollen weisen eine Führungs- oder Laufrille auf, in der das Seil geführt und umgelenkt wird.

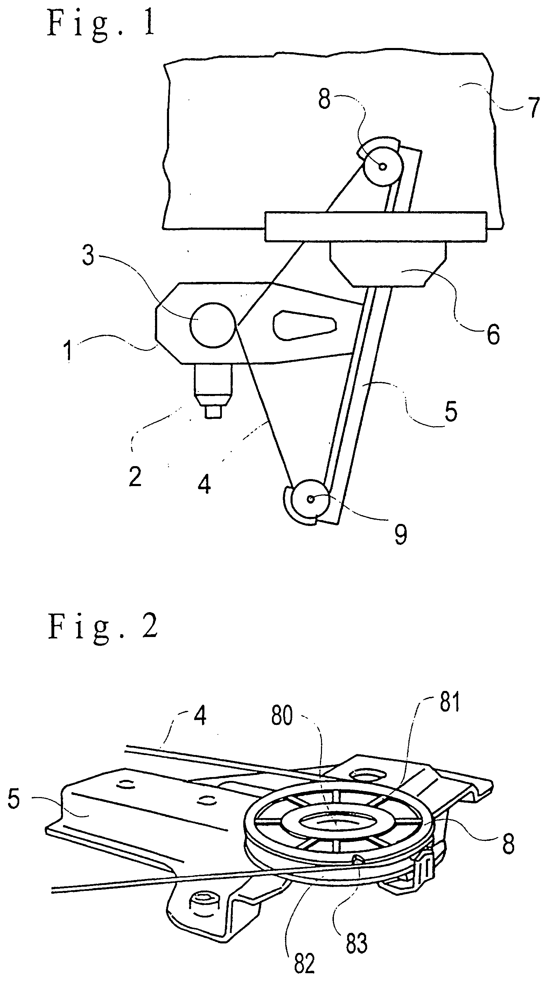

Figur 1 zeigt als Beispiel einen einsträngigen Seilfensterheber zum Anheben und Absenken einer Fensterscheibe 7, die in einem Mitnehmer 6 eingefaßt ist. Der Mitnehmer 6 ist mit einem Seil 4 verbunden und auf einer Führungsschiene 5 verschiebbar gelagert. Das Seil 4 ist um eine Seiltrommel 3 einer Antriebseinheit 1 gewickelt, die in dem dargestellten Beispiel einen Elektromotor 2 als Antriebselement aufweist. An den Enden der Führungsschiene 5 sind Seilumlenkrollen 8, 9 angeordnet, die das im Bereich der Führungsschiene 5 parallel zur Führungsschiene 5 geführte Seil 4 zur Seiltrommel 3 umlenken, wo das Seil 4 ein- oder mehrfach um die Seiltrommel 3 gewickelt und mit dieser verbunden ist. Durch Rotation der Seiltrommel 3 in der einen oder anderen Drehrichtung wird der Mitnehmer 6 zusammen mit der Fensterscheibe 7 auf der Führungsschiene 5 angehoben oder abgesenkt.

Figur 2 zeigt in vergrößerter Einzeldarstellung die Seilumlenkrolle 8, die an das obere Ende der Führungsschiene 5 gemäß Figur 1 montiert ist. Die Seilumlenkrolle 8 weist eine Achsbohrung 80 auf, die auf eine mit der Führungsschiene 5 bzw. einem mit der Führungsschiene 5 verbundenen Befestigungselement vorgesehenen Achse aufgesteckt wird. Mehrere Stege 81 verbinden die Wandung der Achsbohrung 80 mit der Wandung einer Führungs- oder Laufrille 82, in der das Seil 4 geführt und umgelenkt wird.

Das mit der Seiltrommel 3 reibschlüssig bzw. mit seinen Enden über Formschlußelemente verbundene Seil 4 weist im "entspannten" Zustand des Seilfensterhebers eine Seillose auf, die zu undefinierten Bewegungszuständen des Mitnehmers 6 und damit der Fensterscheibe 7 sowie zu erheblichen Geräuschen und einer beschleunigten Materialermüdung bis hin zu Systemausfällen führen kann. Zum Beseitigen der Seillose wird das Seil gestrafft und in diesem gestrafften Zustand, das heißt mit einer entsprechenden Seillänge bzw. durch die Anordnung von Federelementen, auf die Seilumlenkrollen 8, 9 gemäß Figur 1 aufgelegt.

Um das Einlegen des Seils 4 in die Führungsrillen der Seilumlenkrollen 8, 9 gemäß Figur 1 zu erleichtern, ist, es bekannt, zumindest eine der Seilumlenkrollen mit einer Kerbe 83 gemäß Figur 2 zu versehen, in die das Seil 4 eingelegt und durch Weiterdrehen der Seilumlenkrolle 8 in die Führungsrille 82 eingeführt wird.

Durch das starke Abwinkeln des Seils 4 beim Einlegen in die Kerbe 83 besteht aber die Gefahr einer Seilbeschädigung durch Spleißen bzw. Knicken des Seils. Da dieser Seilbereich anschließend stets im Umlenkbereich der Seilumlenkrolle bewegt wird, besteht weiterhin die Gefahr, daß das vorgeschädigte Seil in diesem Bereich reißt.

Weiterhin ist es nachteilig, daß das Seil in einem unergonomischen Bewegungsablauf durch Drehen des Handgelenks bei gleichzeitig hoher Kraftbelastung aufgelegt wird, was zu vorzeitigen Ermüdungen und Schädigungen des Handgelenks des Monteurs führt.

Des weiteren ist diese Form des Seilauflegens mit einer zeitaufwendigen Montage verbunden, da zunächst die Kerbe 83 in eine günstige Position für die Montage zu bringen und anschließend mit hohem Kraftaufwand das Einführen des Seils in die Führungsrille vorzunehmen ist.

Aufgabe der vorliegenden Erfindung ist es, eine Seilumlenkrolle der Eingangs genannten Gattung zu schaffen, die ein materialschonendes Einführen des Seils in die Führungsrille der Seilumlenkrolle gewährleistet, einen ergonomischen Bewegungsablauf mit geringem Kraftaufwand ermöglicht und die Montagezeit verringert. Diese Aufgabe wird erfindungsgemäß durch die Merkmale des Anspruchs 1 gelöst.

Die erfindungsgemäße Lösung vermeidet ein rechtwinkliges Abknicken des Seils beim Einführen in die Führungs- oder Laufrille einer Seilumlenkrolle durch ein kontinuierliches Heranführen des Seils vom ungestrafften bzw. gering gestrafften Zustand des Seils in den gestrafften Zustand sowie einen ergonomischen Bewegungsablauf bei geringem Kraftaufwand und einer geringen Montagezeit.

Durch Anordnen eines Übergangsbereichs zwischen der Laufrille und dem der Laufrille benachbarten Bereich der Montagerille wird ein widerstandsfreier Übergang des Seils von der Montagerille in die Laufrille gewährleistet.

Infolge einer kontinuierlichen Neigung der Seitenstege der Montagerille im Übergangsbereich in Richtung auf die Führungsrille sowie durch Unterbrechen des zwischen der Montagerille und der Laufrille angeordneten Steges wird das Überleiten des Seils von der Montagerille in die Laufrille zusätzlich erleichtert.

Vorzugsweise weist die Montagerille die Kontur eines Dreiecks mit konvexen Seiten (Projektion eines sphärischen Dreiecks auf eine Ebene) auf, dessen Ecken vorteilhafterweise abgerundet sind.

Durch diese Formgebung der Montagerille nimmt das in die Montagerille eingelegte Seil die Seilumlenkrolle beim Ziehen des Seils ein geringes Stück mit, bis das Seil auf einen Eckpunkt des Dreiecks der dreiecksförmigen Kontur der Montagerille gelangt, wo das Seil geringfügig geknickt und infolge erhöhter Reibung auf den kleinen Eckabschnitt mitgenommen und über den Übergangsbereich in die Laufrille eingeführt wird.

In einer bevorzugten Ausführungsform besitzt die Montagerille im wesentlichen eine gleichschenklige, dreieckförmige Kontur mit abgerundeten Ecken, bei der die Basis nahe der Achse der Seilumlenkrolle liegt und die gegenüberliegende Spitze des Dreiecks in den Übergangsbereich bzw. in die Laufrille mündet.

Durch die Anordnung zusätzlicher Klemmbereiche für das Seil in der Montagerille kann der Reibschluß des Seils mit der Seilumlenkrolle während der Montage vergrößert und damit das Einlegen des Seils in die Laufrille erleichtert werden.

Weitere vorteilhafte Ausgestaltungen der erfindungsgemäßen Lösung sind den Merkmalen des Ansprüche 8 bis 11 zu entnehmen.

Anhand eines in der Zeichnung dargestellten Ausführungsbeispiels soll der der Erfindung zugrunde liegende Gedanke näher erläutert werden. Es zeigen:
- Fig. 1 -: eine schematische Darstellung der Einzelteile eines einsträngigen Seilfensterhebers;
- Fig. 2 -: eine vergrößerte Darstellung einer Seilumlenkrolle nach dem Stand der Technik;
- Fig. 3 -: eine Draufsicht auf eine erfindungsgemäße Seilumlenkrolle mit Montage- und Führungsrille;
- Fig. 4 -: eine Ansicht der Seilumlenkrolle gemäß Figur 3 in Richtung des Pfeils IV;
- Fig. 5 -: einen Schnitt durch die Seilumlenkrolle gemäß Figur 3 entlang der Linie V-V und
- Fig. 6 -: eine schematische perspektivische Ansicht einer erfindunggemäß ausgebildeten Seilumlenkrolle.

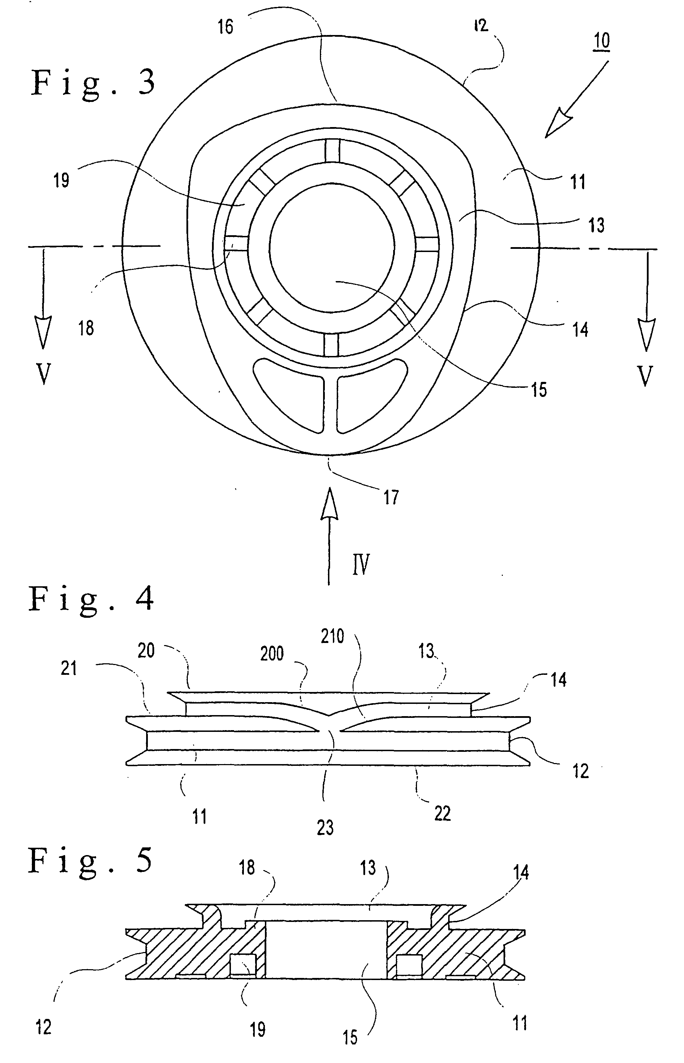

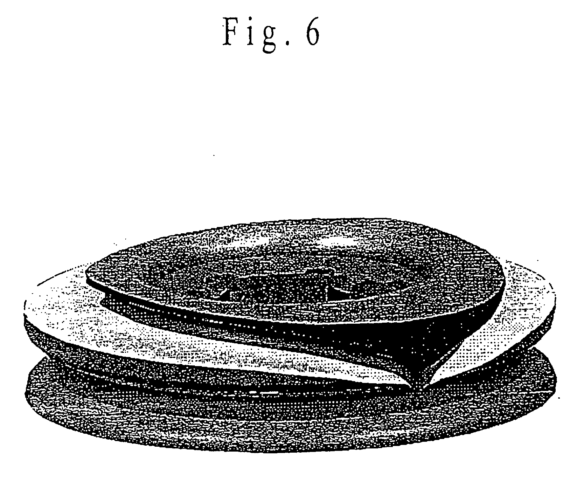

Die in Figur 3 in einer Draufsicht, in Figur 4 in einer stirnseitenansicht, in Figur 5 im Querschnitt und in Figur 6 perspektivisch dargestellte Seilumlenkrolle 10 weist einen zylindrischen Grundkörper 11 mit einer Achse bzw. Achsbohrung 15 und einer peripheren, in der Zylinderwand vorgesehenen Laufrille 12 auf. Die Laufrolle 12 dient zur Aufnahme des Seils im Umlenkbereich und ist durch seitliche Stege 21 und 22 begrenzt. Auf der einen Seite des zylindrischen Grundkörpers 11 ist ein Montagekörper 13 angeordnet, der die Kontur eines gleichschenkligen Dreiecks mit konvexen, d.h. nach außen gewölbten Seiten, sowie abgerundeten Ecken aufweist. An der Peripherie des Montagekörpers 13 ist eine Montagerille 14 vorgesehen, die seitlich von Stegen 20, 21 gemäß Figur 4 begrenzt wird.

Die Basis 16 des gleichschenkligen Dreiecks befindet sich nahe der Achse 15, während die gegenüberliegende, abgerundete Spitze 17 des gleichschenkligen Dreiecks des Montagekörpers 13 mit der Außenkontur des Grundkörpers 11 fluchtet, so daß die Montagerille 14 in einem Übergangsbereich 23 in die Laufrille 12 mündet.

In dem Übergangsbereich 23 ist der die Montagerille 14 begrenzende äußere Steg 20 in einem Bereich 200 zur Laufrille 11 ebenso geneigt wie der die Montagerille 14 von der Laufrille 12 trennende Steg 21 in einem Bereich 210, der im Übergangsbereich 23 unterbrochen ist.

Zum Auflegen eines Seils und Einführen des Seils in die Laufrille 12 wird das Seil in die Montagerille 14 im Bereich des Basis 16 des gleichschenkligen Dreiecks des Montagekörpers 13 eingelegt, wo die Schleife des Seils aufgrund der Nähe zur Achse 15 verkürzt ist. Durch Ziehen des Seils in der einen oder anderen Richtung bzw. durch Drehen der Antriebseinheit des Seilfensterhebers nimmt das Seil die Seilumlenkrolle 10 mit und wird an den Eckpunkten des gleichschenkligen Dreiecks geringfügig eingeknickt, so daß der Reibschluß zwischen dem Seil und der Montagerille 14 infolge des geringen Flächenabschnitts erhöht wird und sich das Seil über einen der beiden Schenkel des gleichschenkligen Dreiecks legt und im Übergangsbereich 23 in die Laufrille 12 gezogen wird. Da im montierten Zustand des Seils die Laufrillen der Seilumlenkrollen in einer Ebene liegen, verharrt das Seil in dieser Stellung, ohne auf die Montagerillen zurückzufallen.

Durch eine entsprechende Formgebung der Laufrille 14 bzw. durch Anbringen ausgeprägter Klemmbereiche kann der Reibschluß zwischen dem Seil und der Montagerille 14 während der Montage des Seils erhöht und damit das Einführen des Seils in die Laufrille 12 erleichtert werden.

Es kann auch vorgesehen sein, daß das Seil durch Drehung der Seilumlenkrolle 10 von der Montagerille 14 in die Laufrille 12 gelangt, indem die Stirnseiten der Seilumlenkrolle beispielsweise mit zwischen Stegen 18 angeordneten Vertiefungen 19 versehen werden, in die formschlüssig ein entsprechend geformtes Werkzeug eingreift, das über eine Hebelverbindung zum Drehen der Seilumlenkrolle in der gewünschten Richtung zum Einlegen des Seils in die Laufrille 12 gedreht wird.

Zur erleichterten Montage wird jedoch vorzugsweise eine Zugkraft auf das Seil ausgeübt, damit dieses von der Montagerille 14 über den Übergangsbereich 23 in die Laufrille 12 verbracht wird. Zur weiteren Montageerleichterung wird der Montagekörper 13 auf beiden Seiten des Grundkörpers 11 angeordnet, so daß keine entsprechende Seitenorientierung der Seilumlenkrolle 10 bei der Montage erforderlich ist.

Bei entsprechender Konfiguration des Seils und der Geometrie des Seilfensterhebers kann es ausreichend sein, daß eine der mehreren Seilumlenkrollen erfindungsgemäß ausgebildet ist, während die anderen Seilumlenkrollen keine Montagehilfe aufweisen. Vorzugsweise sind jedoch alle Seilumlenkrollen mit der erfindungsgemäßen Montagehilfe ausgerüstet, um auch hierdurch die Montagezeit zu verkürzen und die Montage insgesamt zu erleichtern.

## Patentansprüche

1. Seilfensterheber mit einer Antriebseinheit (1), einer Führungsschiene (5) für einen mit einer Fensterscheibe (7) und einem Seil (4) verbundenen Mitnehmer (6) und Seil-Umlenkrollen (8-10) mit einer Führungs- oder Laufrille (12, 82) für das Seil,
**dadurch gekennzeichnet,**
**daß** mindestens eine Seilumlenkrolle (10) mit einer in axialer Richtung neben der Laufrille (12) angeordneten Montagerille (14) versehen ist, die einen der Achse (15) der Seilumlenkrolle (10) benachbarten Bereich (16) und einen der Laufrille (12) benachbarten Bereich (17) aufweist.

2. Seilfensterheber nach Anspruch 1, **dadurch gekennzeichnet, daß** zwischen der Laufrille (12) und dem der Laufrille (12) benachbarten Bereich (17) der Montagerille (14) ein Übergangsbereich (23) angeordnet ist.

3. Seilfensterheber nach Anspruch 2, **dadurch gekennzeichnet, daß** im Übergangsbereich (23) die Seitenstege (20, 21) der Montagerille (14) zur Laufrille (12) geneigt sind und der zwischen der Montagerille (14) und der Laufrille (12) angeordnete Steg (21) unterbrochen ist.

4. Seilfensterheber nach mindestens einem der vorangehenden Ansprüche, **dadurch gekennzeichnet, daß** die Montagerille (14) die Kontur eines Dreiecks mit konvexen Seiten aufweist.

5. Seilfensterheber nach Anspruch 4, **dadurch gekennzeichnet, daß** die Ecken des Dreiecks abgerundet sind.

6. Seilfensterheber nach Anspruch 4 oder 5, **dadurch gekennzeichnet, daß** die Kontur der Montagerille (14) aus einem gleichschenkligen Dreieck besteht, dessen Basis den der Achse (15) der Seilumlenkrolle (10) benachbarten Bereich (16) und deren zwischen den Schenkeln des Dreiecks liegende Ecke den der Laufrille (12) benachbarten Bereich (17) bildet.

7. Seilfensterheber nach mindestens einem der vorangehenden Ansprüche, **dadurch gekennzeichnet, daß** in der Montagerille (14) mindestens ein Klemmbereich für das Seil (4) vorgesehen ist.

8. Seilfensterheber nach mindestens einem der vorangehenden Ansprüche, **dadurch gekennzeichnet, daß** auf mindestens einer Seite der Seilumlenkrolle (10) eine Eingriffsprägung (18, 19) zur formschlüssigen Verbindung mit einem Montagewerkzeug vorgesehen ist.

9. Seilfensterheber nach Anspruch 8, **dadurch gekennzeichnet, daß** die Eingriffsprägung aus mehreren stegförmigen Speichen (18) besteht, die zwischen der Achse (15) und der Peripherie der Seilumlenkrolle (10) angeordnet sind.

10. Seilfensterheber nach mindestens einem der vorangehenden Ansprüche, **dadurch gekennzeichnet, daß** die Montagerille (14) auf beiden Seiten der Seilumlenkrolle (10) angeordnet ist.

11. Seilfensterheber nach mindestens einem der vorangehenden Ansprüche, **dadurch gekennzeichnet, daß** sämtliche Seilumlenkrollen des Seilfensterhebers mit einer Montagerille (14) versehen sind.

## Claims

1. Cable window lifter with a drive unit (1), a guide rail (5) for a follower (6) connected to the window pane (7) and cable (4), and cable deflection pulleys (8-10) with a guide or bearing groove (12,82) for the cable
**characterised in that**
at least one cable deflection pulley (10) is provided with an assembly groove (14) mounted in the axial direction next to the bearing groove (12) wherein the assembly groove has an area (16) adjoining the axis (15) of the cable deflection pulley (10) and an area (17) adjoining the bearing groove (12).

2. Cable window lifter according to claim 1 **characterised in that** a transition area (23) is provided between the bearing groove (12) and the area (17) of the assembly groove (14) adjoining the bearing groove (12).

3. Cable window lifter according to claim 2 **characterised in that** in the transition area (23) the side webs (20, 21) of the assembly groove (14) are inclined towards the bearing groove (12) and the web (21) between the assembly groove (14) and the bearing groove (12) is interrupted.

4. Cable window lifter according to at least one of the preceding claims **characterised in that** the assembly groove (14) has the contour of a triangle with convex sides.

5. Cable window lifter according to claim 4 **characterised in that** the corners of the triangle are rounded.

6. Cable window lifter according to claim 4 or 5 **characterised in that** the contour of the assembly groove (14) consists of an equilateral triangle whose base forms the area adjoining the axis (15) of the cable deflection pulley (10) and whose corner lying between the arms of the triangle forms the area (17) adjoining the bearing groove (12).

7. Cable window lifter according to at least one of the preceding claims **characterised in that** at least one clamping area is provided in the assembly groove (14) for the cable (4).

8. Cable window lifter according to at least one of the preceding claims **characterised in that** on at least one side of the cable deflection pulley (10) there is an engagement indentation (18,19) for positive locking connection with an assembly tool.

9. Cable window lifter according to claim 8 **characterised in that** the engagement indentation is formed from several web-like spokes (18) which are arranged between the axis (15) and the periphery of the cable deflection pulley (10).

10. Cable window lifter according to at least one of the preceding claims **characterised in that** the assembly groove (14) is mounted on either side of the cable deflection pulley (10).

11. Cable window lifter according to at least one of the preceding claims **characterised in that** all the cable deflection pulleys of the cable window lifter are provided with an assembly groove (14).

## Revendications

1. Lève-vitre à câble comprenant une unité d'entraînement (1), une glissière de guidage (5) destinée à un organe d'entraînement (6) relié à une vitre (7) et à un câble (4), et des galets (8-10) de renvoi du câble qui comportent une gorge (12, 82) de guidage ou de défilement dudit câble,
**caractérisé par le fait**
**qu'**au moins un galet (10) de renvoi du câble est muni d'une rainure de montage (14) qui est disposée à côté de la gorge de défilement (12), dans le sens axial, et comprend une région (16) voisine de l'axe (15) dudit galet (10) de renvoi du câble, et une région (17) voisine de ladite gorge de défilement (12).

2. Lève-vitre à câble, selon la revendication 1, **caractérisé par le fait qu'**une zone de transition (23) est interposée entre la gorge de défilement (12) et la région (17) de la rainure de montage (14) qui est voisine de ladite gorge de défilement (12).

3. Lève-vitre à câble, selon la revendication 2, **caractérisé par le fait que**, dans la zone de transition (23), les ailes latérales (20, 21) de la rainure de montage (14) sont inclinées vers la gorge de défilement (12), et l'aile (21) située entre ladite rainure de montage (14) et ladite gorge de défilement (12) est interrompue.

4. Lève-vitre à câble, selon au moins l'une des revendications précédentes, **caractérisé par le fait que** la rainure de montage (14) possède la configuration d'un triangle à côtés convexes.

5. Lève-vitre à câble, selon la revendication 4, **caractérisé par le fait que** les coins du triangle sont arrondis.

6. Lève-vitre à câble, selon la revendication 4 ou 5, **caractérisé par le fait que** le profil de la rainure de montage (14) est constitué d'un triangle isocèle dont la base forme la région (16) voisine de l'axe (15) du galet (10) de renvoi du câble, et dont le coin situé entre les branches dudit triangle forme la région (17) voisine de la gorge de défilement (12).

7. Lève-vitre à câble, selon au moins l'une des revendications précédentes, **caractérisé par le fait qu'**au moins une zone de coincement, affectée au câble (4), est prévue dans la rainure de montage (14).

8. Lève-vitre à câble, selon au moins l'une des revendications précédentes, **caractérisé par le fait qu'**un matriçage de venue en prise (18, 19) est prévu, sur au moins un côté du galet (10) de renvoi du câble, en vue de la liaison par concordance de formes avec un outil de montage.

9. Lève-vitre à câble, selon la revendication 8, **caractérisé par le fait que** le matriçage de venue en prise se compose de plusieurs rayons (18) en forme de membrures, interposés entre l'axe (15) et la périphérie du galet (10) de renvoi du câble.

10. Lève-vitre à câble, selon au moins l'une des revendications précédentes, **caractérisé par le fait que** la rainure de montage (14) est disposée des deux côtés du galet (10) de renvoi du câble.

11. Lève-vitre à câble, selon au moins l'une des revendications précédentes, **caractérisé par le fait que** tous les galets de renvoi du câble dudit lève-vitre à câble sont munis d'une rainure de montage (14).
